# EUROPEAN PATENT SPECIFICATION

(11) **EP 2 387 303 B1**
(45) Date of publication and mention of the grant of the patent: **12.11.2014**
(21) Application number: 10731091.4
(22) Date of filing: 15.01.2010
(51) Int. Cl.: A01G 23/083

(54) **A FELLER DEVICE WITH A MOVABLE DELIMBING BLADE**
FÄLLGERÄT MIT BEWEGLICHER ENTASTUNGSKLINGE
DISPOSITIF D'ABATTAGE AVEC LAME D'ÉBRANCHAGE MOBILE

(30) Priority: 16.01.2009 FI 20095038
(43) Date of publication of application: 23.11.2011
(73) Proprietor: Waratah OM OY, 80100 Joensuu (FI)
(72) Inventor: KESKINEN, Juho, FI-33340 Tampere (FI); KINNUNEN, Kari, FI-80130 Joensuu (FI); HANNE, Kari, FI-36200 Kangasala (FI)
(74) Representative: Tampereen Patenttitoimisto Oy
(86) International application number: PCT/FI2010/050015
(87) International publication number: WO 2010/081937

(56) References cited:
- EP-A1- 0 346 308
- WO-A1-2005/020669
- US-A- 4 194 542
- US-A- 4 537 236
- US-A- 4 974 648
- US-A- 5 785 101
- US-A- 5 785 101
- US-B1- 6 318 425

## Description

### Field of the invention

The invention relates to a feller device for felling and delimbing of tree trunks with a pivotably mounted delimbing blade.

### Background of the invention

For the processing of tree trunks, a feller device is used, whose purpose is to grip an upright growing tree, to cut the tree and to fell it. After this, the feller device delimbs the tree trunk and cuts it into pieces of fixed length. The feller device is normally mounted by joints at the end of the crane of a forest machine. The working machine is particularly a harvester which moves on a terrain by means of wheels or a crawler. Some feller devices may also be used for the loading of the trunk in forwarders used as harvesters, wherein they are also provided with grapple members turnable with respect to the frame structure, pairwise on different sides of the trunk. The grapple may also consist of grapple members for delimbing. The feller device comprises the necessary actuators, normally hydraulic cylinders and hydraulic motors which can be used to control the position and the different functions of the feller device. The devices are fixed to the end of the crane of the forest machine, normally by means of a rotating device, wherein it is possible to turn the device around a vertical rotation axis.

The feller device, which is also called a harvester head or a felling head, normally comprises at least upper grapple members which are normally two in number and which are fixed to the frame structure of the feller device in a rotatable manner. The grapple members are normally arranged on opposite sides of the tree trunk. Typically, the grapple members also comprise delimbing blades for cutting off the branches while the trunk is being supported and fed through the device. The feller device may also comprise a second, lower pair of grapple members, or a single grapple member which is provided with a delimbing blade, if necessary. The feeding members normally comprise two feed rolls or feed pulleys which are pressed against the trunk and pull it past the delimbing blades and through the apparatus by means of friction. The feeding members are normally arranged on opposite sides of the tree trunk. The feller device is also provided with cross-cutting devices, such as a chain saw, for performing the cutting of the tree trunk for felling, and sawing it into pieces of fixed length.

A harvester head is disclosed in US 5,785,101. Another harvester head is disclosed in US 6,318,425 B1. A forest machine with a harvester head mounted at the end of the crane is disclosed in WO 03/096794 A1. It is also possible to collect a number of small-sized trees in the feller device, wherein collecting devices are utilized, which are connected to the feller device and which are used together with the grapple members to grip the tree. A collecting device is disclosed in WO 01/10190 A1.

Normally, a delimbing blade is also fixed to the frame structure of the feller device for delimbing branches of the tree trunk and to complement the function of the other delimbing blades. The delimbing blade is normally placed on the front surface of the frame structure of the feller device. Said delimbing blade is used for delimbing that side of the tree trunk that cannot be reached by the delimbing blades of the grapple members. The delimbing blade may be either stationary or movable, wherein the delimbing blade can follow the rough shape of the tree trunk. Examples of movable delimbing blades are disclosed in US 4,194,542 and US 5,732,754.

During the delimbing, the delimbing blade is subjected to great forces, wherein the structure must be strong and reliable, and furthermore, the device for moving the delimbing blade must be insensitive to impacts and impurities. In several wood species, the lower part of the tree trunk is free of branches, wherein it would not be necessary to use the delimbing blades. In many cases, it is necessary to delimb the top part of the tree only. Furthermore, in hardwood species, such as oak, beech and walnut, it is possible that the shape of the tree trunks varies to a great extent. It is not desirable that the delimbing blade bores into the tree trunk and causes unnecessary damage to the trunk because of its crookedness or shape. The same tree trunk also has branches which have to be cut off, so that the delimbing blade has to be available.

According to prior art, a swinging delimbing blade is used, whose cutting edge can, thanks to the movement of the delimbing blade, be moved farther away from the tree trunk than normally. The delimbing blade is connected by a joint to said front surface, and a cylinder used as an actuator extends through an opening in the front surface, the first end of the cylinder being connected to the delimbing blade to move the delimbing blade into different positions. The cylinder is substantially parallel to the tree trunk. The rotation axis of the joint is transverse to the longitudinal direction of the tree trunk. It is obvious that this placement of the actuator makes it difficult to place the other members and actuators behind the front surface. It is almost impossible to add such a blade in an old device. In view of maintenance, it may be difficult to access the connection of the second end of the cylinder and to connect hoses to the cylinder. Moreover, the hoses take space and must not be damaged.

### Summary of the invention

It is an aim of the present invention to eliminate the drawbacks presented above.

The feller device for felling and delimbing of tree trunks with a pivotably mounted delimbing blade according to the invention will be presented in claim 1.

According to the invention, the delimbing blade can be moved to a position, in which the cutting edge of the delimbing blade is not against the tree trunk but is farther away from the tree trunk. The position can be called an evasive position, wherein the cutting edge does not easily hit the shapes of the tree trunk. The delimbing blade is connected to the feller device in a swinging manner, and the delimbing blade is capable of returning to its normal position when it hits a branch that has to be cut off. Said branch pushes the delimbing blade so that no other external force will be needed; nor does the operator of the feller device need to control the position of the delimbing blade.

If necessary, the delimbing blade can be, under control by the operator or even automatically, moved into different positions by means of an actuator. The normal position can be used all the time, for example during the delimbing of a pine, a spruce, or a birch. The evasive position of the delimbing blade can be used in connection with the processing of almost all suitable tree species, particulady if the lower part of the tree trunk is free of branches. In an example, the delimbing blade is supported to the frame structure of the feller device but not to the actuator during delimbing. The function of the actuator is solely to move the delimbing blade into different positions, wherein the actuator may be small in size and generate a small force.

In an example, the aggregate formed by the delimbing blade and the actuator has been made particularly compact, and at the same time, the actuator is well shielded within the structure. Furthermore, the structure is thin, so that the size of the feller device does not become unnecessarily large. An optimal placement of the joints of the structure makes it possible that the whole actuator together with the delimbing blade can be placed on the front side of the front surface of the feller device. The delimbing blade and the actuator are easy to maintain. It is easier than before to place the other members and actuators behind the front surface, particularly the cross-cutting device intended for cutting at the top.

### Brief description of the drawings

In the following description, the invention will be illustrated by means of examples and with reference to the appended drawings, in which:
- Figs. 1a and 1b: show a feller device, in which the delimbing blade according to the invention is applied, seen from the side,
- Figs. 2a and 2b: show the delimbing blade according to the invention in different positions, seen from the side,
- Fig. 3: shows the feller device of 1a and its actuator seen from the front, and
- Fig. 4: shows the delimbing blade of 2a and its actuator seen from the front.

### Detailed description of the invention

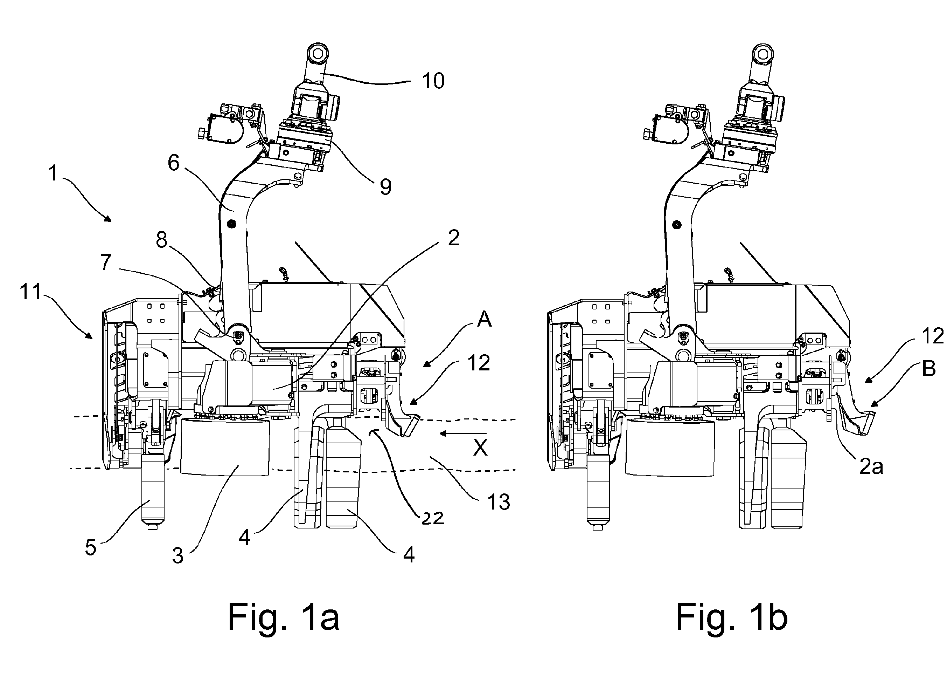

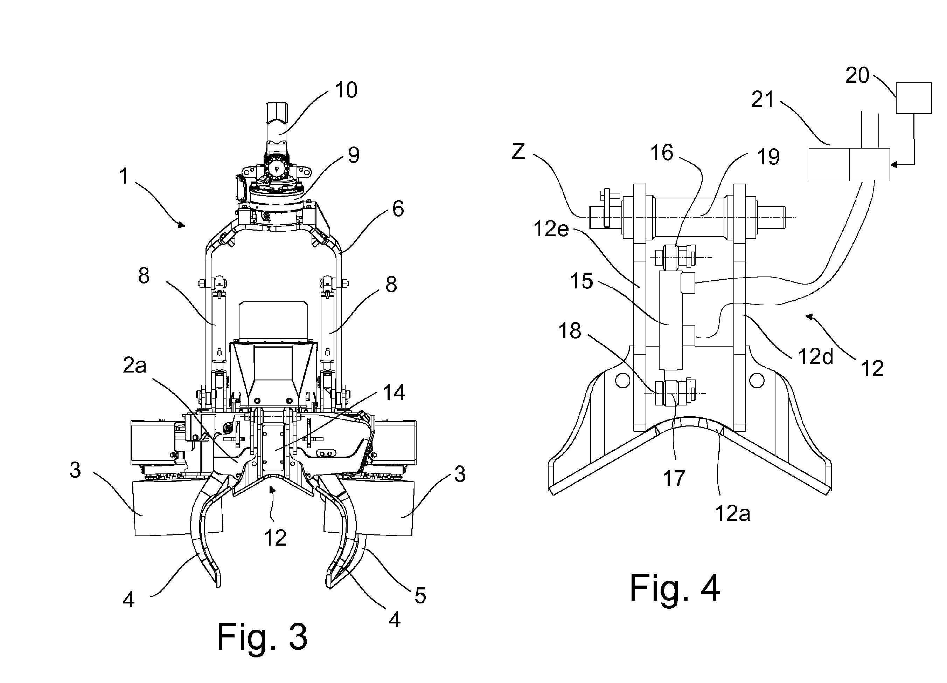

Figure 1 shows a feller device 1 for cutting, felling and delimbing of tree trunks, wherein a frame structure or a frame 2 is shown, which is placed against a tree trunk to be processed and to which the mounting arms of the feeding members 3 are coupled by joints. In the example of Fig. 1a, there are two feeding members 3 (see Fig. 3) placed on opposite sides of the tree trunk, and each feeding member 3 comprises a roll rotatable by means of a motor. The trunk 13 is carried and pressed against the frame 2 by the feeding members 3. The trunk 13 moves in its longitudinal direction which is parallel to the frame 2. An actuator is coupled between mounting arms, normally a hydraulic cylinder, to take care of the rotational position and the compressive force of the feeding member 3. Two cylinders can also be used which are coupled between the frame and the mounting arms.

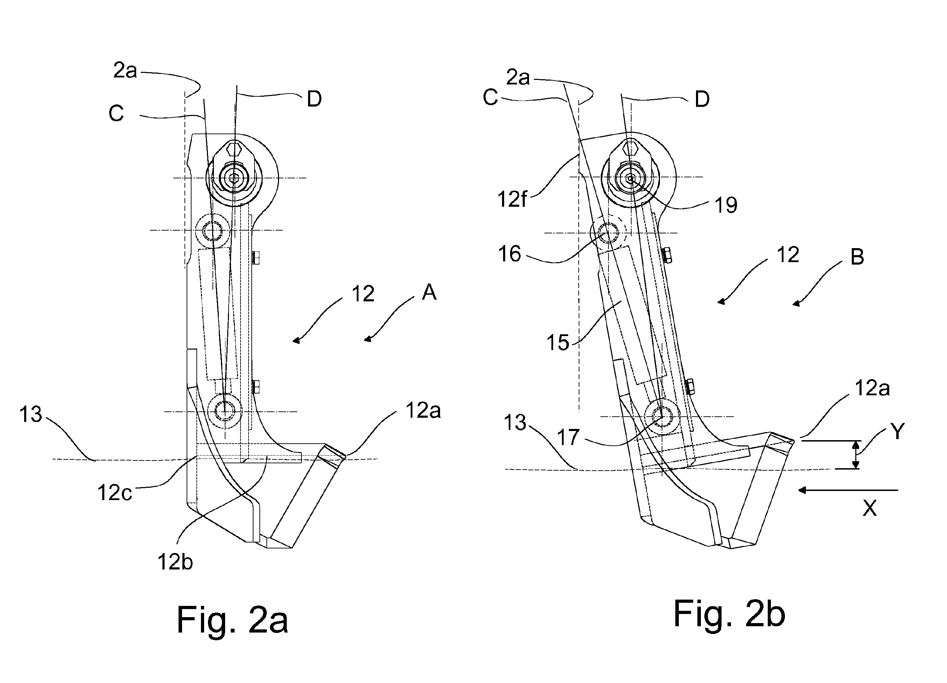

The feller device 1 also comprises a curved grapple member 4 equipped with a delimbing blade and having a rotation axis substantially parallel to the longitudinal direction of the tree trunk. On the opposite side of the trunk, another curved grapple member 4 is provided as a pair to the grapple member 4, also equipped with a delimbing blade. The grapple members 4 are used to grip the trunk, to support the trunk and to delimb the trunk when the trunk is fed in the longitudinal direction by the feeding members 3 through the feller device 1. For delimbing the top surface of the trunk 13, the feller device 1 is also equipped with a curved delimbing blade 12, against which the trunk is pressed and which is moved by an actuator 15 (see Fig. 2a or Fig. 4).

The feller device 1 is vertical when a substantially vertical trunk is gripped, wherein the grapple members 4 and the feeding members 3 are open and the trunk is placed against the supporting surfaces of the frame 2. The device 1 is in the horizontal position of Figs. 1 and 3 when the trunk has been cut and it is being delimbed in the horizontal position, wherein the grapple members 4 and the feeding members 3 are closed and support the trunk 13. The feller device 1 also comprises a cross-cutting device 11 for cutting off the trunks. The cross-cutting device is used to cut off that portion of the trunk which has been delimbed and is hanging in the device 1. The cross-cutting device 11 is normally a chain saw equipped with a pivotable guide bar. The chain saw is placed in a saw box. The cross-cutting device 11 also performs the cross-cutting of the trunk to pieces of fixed length when it is carried in the horizontal direction. In the presented example, the feller device 1 further comprises an upper cross-cutting device 22 for cutting, for example, the top of the trunk and removing it from the delimbed trunk. The cross-cutting device 22 is normally a chain saw equipped with a pivotable guide bar and placed inside a casing. The cross-cutting device 22 is placed before the delimbing grapple members 4 when seen in the direction of movement X, and after the delimbing blade 12.

The frame 2 can be rotated about 90 degrees from the position of Fig. 1 to a horizontal position, by joints 7 around a horizontal rotation axis. The joints 7 connect the frame 2 to a suspending arm 6 which is suspended at the end of the crane of the working machine by means of mounting and rotating members, for example a rotating device 9 and a support 10. The position of the frame 2 in relation to the suspending arm 6 is controlled by one or more actuators 8 mounted, in this example, between the frame 2 and the suspending arm 6.

The device 1 also comprises a lower grapple member 5, which may be equipped with a delimbing blade. Another corresponding grapple member may be provided as a pair to the lower grapple member 5. The grapple member 5 supports the trunk and secures the placement of the trunk 13 against the supporting surfaces of the frame 2.

The structure of the grapple member may vary. The structure of the suspending arm may vary to a great extent, comprising, for example, a short suspending arm mounted on the top surface of the frame. The suspending arm may also be mounted on the rear surface of the frame and comprise only one arm structure. In Figure 1, the suspending arm 6 has a fork-like shape, extending to both sides of the frame 2. The actuators of the feller device are controlled by means of a pressurized medium in a way known as such, and they are normally actuators driven hydraulically and controlled by means of a valve control circuit known as such. In addition to this, the principle of operation of the grapple members and the feeding members is known as such from devices of similar type.

In Figs. 1 a and 2a, the delimbing blade 12 is in the normal position A, in which the delimbing blade 12 glides along the trunk 13 and is ready to cut off branches. The delimbing blade 12 has a surface 12b (see Fig. 2a) that is substantially parallel with the trunk 13, is placed against the trunk 13, and follows the shape of the trunk 13. The cutting edge 12a is at the front edge of the surface 12b, but it is also possible to arrange the cutting edge 12a slightly higher than the surface 12b in relation to the trunk 13. It is also possible to arrange both the surface 12b and the cutting edge 12 to be higher, in the position of Fig. 1a, than those supporting surfaces of the frame 2, against which the trunk 13 is pressed. Said distance will determine the clearance between the cutting edge 12a and the trunk 13. The front edge of the surface 12b is equipped with the cutting edge 12a that cuts off the branches. The cutting edge 12a may also be bored into the roughness of the trunk 13. The delimbing blade 12 is supported against the front surface 2a in the frame 2, the front surface receiving the load to which the delimbing blade 12 is subjected.

In Figs. 1b and 2b, the delimbing blade 12 is in the evasive position B, in which the cutting edge 12a is at a distance Y from the trunk 13. Said distance Y is now greater than in the normal position A. Said distance Y is maintained in such a way that the cutting edge 12a is higher than those supporting surfaces of the frame 2, against which the trunk 13 is pressed. Said distance Y is greater than the above-mentioned clearance. In another example, said distance Y is maintained in such a way that the cutting edge 12a is higher than that point of the surface 12b, against which the trunk 13 is supported. The trunk 13 is thus supported against the rear part 12c or rear edge of the surface 12b, if the surface 12b is placed in a slanted position with respect to the trunk 13, when the delimbing blade 12 is in the evasive position B. The rear part 12c is preferably provided with a bevel, a rounding or another suitable shape that takes into account the movements of the trunk or, if necessary, also keeps the rear part at a sufficient distance from the trunk when the delinibing blade 12 is in the evasive position.

According to the example of Figs. 1b and 2b, the delimbing blade 12 is in a position rotated forwards by a joint 19, and it is not supported against the front surface 2a. The delimbing blade 12 is turned away from the frame 2 and is elevated in relation to the trunk 13 which moves to the left in its longitudinal direction X. The delimbing blade 12 comprises a joint 19, by means of which the delimbing blade 12 is mounted to the frame 2 in a rotatable manner. The frame 2 comprises means, such as lugs, to which the delimbing blade 12 is mounted, for example, by means of an articulated shaft. The rotation axis Z of the joint 19 is transverse to the longitudinal direction X of the trunk. The fork-shaped delimbing blade 12 comprises two parallel forks 12d and 12e, between which an actuator 15 is placed. The joint 19 is placed at the end of said forks. The first joint 17 of the actuator, which is coupled to the delimbing blade 12, and the second joint 16 of the actuator, which is coupled to the frame 2, are also placed between the forks 12d, 12e. For the second joint 16, the frame 2 is equipped with members, such as lugs, to which the actuator 15 is mounted in a rotating manner, for example by means of an articulated shaft. For the first joint 17, the delimbing blade 12 is also equipped with members, such as lugs, to which the actuator 15 is mounted in a rotating manner, for example by means of an articulated shaft. The rotation axes of the joints 16, 17 are transverse to the longitudinal direction X of the trunk. In Figs 1a and 2a, the delimbing blade 12, the joints 16, 17, and the actuator 15 are all placed on the same side in relation to the front surface 2a, preferably on its front side or in front of it, with respect to the normal travel direction of the trunk.

Furthermore, as the device 1 comprises the cross-cutting device 22, the actuator 15 does not disturb or prevent the movement of the guide bar of the cross-cutting device, and the cross-cutting device 22 can be placed as close to the delimbing blade 12 as possible, to obtain a short, compact structure.

The front surface 2a is typically a structure that is transverse, normally substantially perpendicular to the longitudinal direction X of the trunk. It is normally a plate piece that constitutes a part of the frame 2 of the feller device 1. The front surface 2a may be a planar surface, or it may also comprise stepped structures and other mounting members as well as reinforcements. In the examples of the figures, the front surface 2a is simultaneously the front surface of the casing for the cross-cutting device 22, to which surface the delimbing blade 12 is connected.

The front surface 2a may also be slanted in relation to the longitudinal direction X, in which case the position of Fig. 2b almost corresponds to the normal position, but the part that comprises the surface 12b and the cutting edge 12a is fixed in the position shown in Fig. 2a. The lines C and D are thus not perpendicular to the longitudinal direction X, but a compact structure can still be achieved by placing the joints in a way shown in Fig. 2a.

In Fig. 4, the delimbing blade is shown without a cover 14 (see Fig. 3) and a framework, by means of which the cover 14 is connected to the delimbing blade 12. The actuator 15 is preferably a cylinder that is driven hydraulically and comprises a movable piston whose end is connected to the joint 16 or 17. The other end of the cylinder is connected to the opposite joint 16 or 17. In the normal position A, the cylinder is at its shortest, and the rotation axis of the second joint 16 is at a distance from the line D (see Figs. 2a and 2b) that extends via the rotation axis of the first joint 17 and the rotation axis of the joint 19. Said line D is almost perpendicular to the surface 12b. The line C extends via the rotation axis of the first joint 17 and the rotation axis of the second joint 16. The angle between the lines C and D makes it easier for the cylinder to generate a torque for turning the delimbing blade 12. The angular difference between the lines C and D is preferably about 6°, and it may vary from 4° to 8°, wherein the delimbing blade 12 becomes as compact as possible. The second joint 16 is placed close to the joint 19, wherein the length of the cylinder can be maximized. The joint 16 is placed between the line D and the front surface 2a. The lines C and D are almost parallel, to give a compact structure; similarly, the lines C and D are perpendicular or substantially perpendicular to the longitudinal axis X.

The joints 16 and 19 remain stationary in the different positions of the delimbing blade 12. In the position B of Fig. 2b, the cylinder is at its longest, and the delimbing blade 12 is rotated so that the angular difference between the lines C and D is preferably about 9°, and it may vary from 7° to 11°. The movement of the delimbing blade 12 is limited, for example, in the portion 12f of the blade 12, placed against the front surface 2a. Also in the evasive position B, the joint 16 and the actuator 15 remain shielded between the forks 12d, 12e. Even with a small rotary movement of the delimbing blade 12, the cutting edge 12a is brought to a sufficient distance Y from the trunk 13. The distance Y refers to the perpendicular distance between the cutting edge 12a and the trunk 13. In the evasive position B, the cutting edge 12a is placed closer to the trunk 13 than the joint 19 is. In the presented example, which has a compact structure, the joint 16 is placed between the joints 19 and 17.

The cutting edge 12a is placed at the opposite end of the delimbing blade 12 in relation to the joint 19. The cutting edge 12a has a curved shape and is also concave in relation to the trunk 13. According to the example of Figs. 2a and 2b, the delimbing blade 12 also comprises a surface 12b which, in the normal position A, is substantially parallel to the trunk 13 and its longitudinal direction X. The delimbing blade 12 is typically a piece made of plate pieces by welding, to which also reinforcing wall structures have been included, as needed. The forks 12d, 12e are also plate pieces. Between the forks 12d, 12e, a protective cover 14 is also connected in a detachable manner, to protect the actuator 15 and its connections (see Fig. 3). There are two connections, and hoses are preferably connected to them for the pressurized-medium and the control of the actuator 15.

The actuator 15 is connected to the pressure line and the return line of the pressurized medium system of the feller device 1, by means of one or more control valves 21. The control valve 21 and its electronic control 20 are used to control the different positions of the cylinder used as the actuator 15. For example, the operator of the feller device 1 uses a switch and the electronic control 20 to select the status of the control valve 21 and thereby also the position, in which the delimbing blade 12 is placed. In one example, the operator of the feller device takes care of the position of the delimbing blade 12 without automation, by means of the control members presented above.

In the evasive position B, the cutting edge 12a may hit a branch in the trunk 13. The branch has an impact on the actuator 15 and pushes the delimbing blade 12 to the normal position A. During the cutting of the branch, the delimbing blade 12 is supported to the frame 2, and the force generated by the actuator 15 is not used to keep it in the evasive position B during the cutting of the branch. After the cutting of the branch, the delimbing blade 12 can be kept by the actuator 15 permanently in the normal position A, so that the operation of the delimbing blade 12 can be continued formally.

The invention is not restricted solely to the examples presented above. In the above-presented description, the invention has been illustrated by means of some examples, but the scope of the invention is limited by the appended claims.

## Claims

1. A feller device for felling and delimbing of tree trunks, comprising at least:
- a frame structure (2), against which the trunk is placed, when the trunk is fed in the longitudinal direction (X) through the feller device (1) during delimbing;
- a front surface (2a), which is in the frame structure and transverse to said longitudinal direction;
- a delimbing blade (12) fixed to said front surface and having a cutting edge (12a) for delimbing the trunk when it is fed through the feller device,
- a first joint (19);
charaterized in that by means of said first joint (19) the delimbing blade (12) is fixed to the front surface in a rotatable manner and which has a rotation axis (Z) transverse to said longitudinal direction, wherein said cutting edge (12a) can be turned to a distance (Y) from the trunk;
- a cylinder actuator (15), by means of which the delimbing blade (12) can be moved into at least two different positions (A, B);
- a second joint (17), by means of which the cylinder actuator (15) is connected to the delimbing blade (12); the feller device further comprises:
- a third joint (16), by means of which the cylinder actuator (15) is coupled to the front surface (2a) of the feller device so that all the said joints (16, 17, 19) are placed on the same side of the front surface.

2. The feller device according to claim 1, **characterized in that** the line (D) extending via the first joint (19) and the second joint (17) is perpendicular or almost perpendicular to said longitudinal direction, and also the line (C) extending via the first joint (19) and the third joint (16) is perpendicular or almost perpendicular to said longitudinal direction, but said lines are still different in direction in the different positions (A, B) of the delimbing blade (12).

3. The feller device according to claim 1 or 2, **characterized in that** said cylinder actuator (15) is perpendicular or almost perpendicular to said longitudinal direction.

4. The feller device according to any of the claims 1 to 3, **characterized in that** the third joint (16) is placed between the line (D) extending via the first joint (19) and the second joint (17), and the front surface (2a).

5. The feller device according to any of the claims 1 to 4, **characterized in that** the second joint (17) is placed in the area between the first joint (19) and the cutting edge (12a).

6. The feller device according to any of the claims 2 to 5, **characterized in that** the delimbing blade (12) comprises a surface (12b), against which the trunk can be pressed and at whose front edge said cutting edge (12a) is.

7. The feller device according to any of the claims 2 to 6, **characterized in that** the delimbing blade (12) is supported against the front surface (2a), when the delimbing blade (12) is in the first position (A) for delimbing, and the delimbing blade (12) is rotated off the front surface (2a), when the delimbing blade (12) is in the second position (B) and the cutting edge (12a) is at said distance from the trunk.

8. The feller device according to claim 7, **characterized in that** the delimbing blade (12) can return from the second position (B) to the first position (A) when pushed by a branch in the trunk.

9. The feller device according to any of the claims 2 to 7, **characterized in that** the feller device further comprises a cross-cutting device (22) for cutting the trunk, wherein said front surface (2a) is in said cross-cutting device (22).

10. The feller device according to any of claims 1 to 9, **characterized in that** the delimbing blade (12) comprises a cutting edge (12a) for delimbing the tree trunk when it is fed in its longitudinal direction (X) past the delimbing blade (12) and that the cylinder actuator (15) can be placed almost parallel to a line (D) extending via the first joint (19) and the second joint (17) so that the cylinder actuator (15) and the third joint (16) belonging to the same for connection, are placed in the area between the first and the second joint.

11. The feller device according to claim 10, **characterized in that** the delimbing bladed (12) comprises two forks (12d, 12e), whose one end is provided with said first joint (19) and whose other end is provided with said cutting edge (12a), and the cylinder actuator (15) is placed between said forks.

12. The feller device according to claim 10 or 11, **characterized in that** the delimbing blade (12) comprises control means (20, 21), by means of which an operator can control said cylinder actuator (15).

## Patentansprüche

1. Eine Fällvorrichtung zum Fällen und Entasten von Baumstämmen, die mindestens folgendes aufweist:
- eine Rahmenstruktur (2), gegen die der Baumstamm platziert wird, wenn der Baumstamm während des Entastens in Längsrichtung (X) durch die Fällvorrichtung (1) geführt wird;
- eine Vorderseite (2a), welche sich in der Rahmenstruktur befindet und quer zur Längsrichtung ist;
- ein Entastungsblatt (12), das an der Vorderseite befestigt ist und eine Schneidkante (12a) zum Entasten des Baumstamms beim Durchführen durch die Fällvorrichtung aufweist,
- ein erstes Gelenk (19);
**dadurch gekennzeichnet, dass** mittels des Gelenks (19) das ntastungsblatt (12) an der Vorderseite drehbar befestigt ist und welches eine Drehachse (Z) quer zur Längsrichtung hat, wobei die Schneidkante (12a) in eine Entfernung (Y) vom Baumstamm gedreht werden kann;
- ein Zylinderantrieb (15), mittels dessen das Entastungsblatt (12) in mindestens zwei verschiedene Positionen (A, B) bewegt werden kann;
- ein zweites Gelenk (17), mittels dessen der Zylinderantrieb (15) an dem Entastungsblatt (12) angeschlossen ist;
wobei die Fällvorrichtung ferner folgendes aufweist:
- ein drittes Gelenk (16), mittels dessen der Zylinderantrieb (15) mit der Vorderseite (2a) der Fällvorrichtung so gekoppelt ist, dass alle Gelenke (16, 17,19) an derselben Seite der Vorderseite platziert sind.

2. Fällvorrichtung gemäß Anspruch 1, dadurch gekenntzeichnet, dass die sich über das erste Gelenk (19) und das zweite Gelenk (17) erstreckende Linie (D) senkrecht oder fast senkrecht zur Längsrichtung ist, und auch die sich über das erste Gelenk (19) und das dritte Gelenk (16) erstreckende Linie (C) senkrecht oder fast senkrecht zur Längsrichtung ist, aber die Linien in Richtung der unterschiedlichen Positionen (A, B) des Entastungsblatts (12) weiterhin unterschiedlich sind.

3. Fällvorrichtung gemäß Anspruch 1 oder 2, **dadurch gekennzeichnet, dass** der Zylinderantrieb (15) senkrecht oder fast senkrecht zur Längsrichtung ist.

4. Fällvorrichtung gemäß einem der Ansprüche 1 bis 3, **dadurch gekennzeichnet, dass** das dritte Gelenk (16) zwischen der sich über das erste Gelenk (19) und das zweite Gelenk (17) erstreckenden Linie (D) und der Vorderseite (2a) platziert ist.

5. Fällvorrichtung gemäß einem der Ansprüche 1 bis 4, **dadurch gekennzeichnet, dass** das zweite Gelenk (17) in dem Bereich zwischen dem ersten Gelenk (19) und der Schneidkante (12a) platziert ist.

6. Fällvorrichtung gemäß einem der Ansprüche 2 bis 5, **dadurch gekennzeichnet, dass** das Entastungsblatt (12) eine Oberfläche (12b) aufweist, gegen die der Baumstamm gedrückt werden kann und an dessen Vorderkante sich die Schneidkante (12a) befindet.

7. Fällvorrichtung gemäß einem der Ansprüche 2 bis 6, **dadurch gekennzeichnet, dass** das Entastungsblatt (12) gegen die Vorderseite (2a) gelagert ist, wenn sich das Entastungsblatt (12) in der ersten Position (A) zum Entasten befindet, und das Entastungsblatt (12) von der Vorderseite (2a) weg gedreht wird, wenn sich das Entastungsblatt (12) in der zweiten Position (B) befindet und sich die Schneidkante (12a) in einem Abstand zum Baumstamm befindet.

8. Fällvorrichtung gemäß Anspruch 7, **dadurch gekennzeichnet, dass** das Entastungsblatt (12) aus der zweiten Position (B) in die erste Position (A) zurückkehren kann, wenn es von einem Ast am Baumstamm geschoben wird.

9. Fällvorrichtung gemäß einem der Ansprüche 2 bis 7, **dadurch gekennzeichnet, dass** die Fällvorrichtung darüber hinaus eine uerschneidevorrichtung (22) zum Schneiden des aumstamms aufweist, wobei sich die Vorderseite (2a) in der Querschneidevorrichtung (22) befindet.

10. Fällvorrichtung gemäß einem der Ansprüche 1 bis 9, **dadurch gekennzeichnet, dass** das Entastungsblatt (12) eine Schneidkante (12a) zum Entasten des aumstamms aufweist, wenn er in seiner Längsrichtung (X) am Entastungsblatt (12) vorbeigeführt wird,
und dass der Zylinderantrieb (15) fast parallel zu einer sich über das erste Gelenk (19) und das zweite Gelenk (17) erstreckenden Linie (D) platziert werden kann, so dass der Zylinderantrieb (15) und das zur Verbindung zu ihm gehörende dritte Gelenk (16) in dem Bereich zwischen dem ersten und dem zweiten Gelenk platziert sind.

11. Fällvorrichtung gemäß Anspruch 10, **dadurch gekennzeichnet, dass**
das Entastungsblatt (12) zwei Gabeln (12d, 12e) aufweist, an deren einem Ende das erste Gelenk (19) angebracht ist und an deren anderem Ende die Schneidkante (12a) angebracht ist, und der Zylinderantrieb (15) zwischen den Gabeln platziert ist.

12. Fällvorrichtung gemäß Anspruch 10 oder 11, **dadurch gekennzeichnet, dass** das Entastungsblatt (12) Steuermittel (20, 21) aufweist, mittels derer eine Bedienungsperson den Zylinderantrieb (15) steuern kann.

## Revendications

1. Dispositif d'abattage pour l'abattage et l'ébranchage de troncs d'arbre, comprenant au moins :
- une structure de cadre (2), contre laquelle le tronc est placé, lorsque le tronc est alimenté dans le sens longitudinal (X) à travers le dispositif (1) d'abattage lors de l'ébranchage ;
- une surface avant (2a), qui est dans la structure de cadre et transversale audit sens longitudinal ;
- une lame (12) d'ébranchage fixée à ladite surface avant et ayant un bord coupant (12a) pour ébrancher le tronc lorsqu'il est alimenté à travers le dispositif d'abattage,
- une première articulation (19) ;
**caractérisé en ce qu'**au moyen de ladite première articulation (19) la lame (12) d'ébranchage est fixée à la surface avant d'une manière rotative et qui a un axe de rotation (Z) transversal audit sens longitudinal, dans lequel ledit bord coupant (12a) peut être tourné à une distance (Y) du tronc ;
- un actionneur (15) à cylindre, au moyen duquel la lame (12) d'ébranchage peut être déplacée dans au moins deux positions (A, B) différentes ;
- une deuxième articulation (17), au moyen de laquelle l'actionneur (15) à cylindre est connecté à la lame (12) d'ébranchage ;
le dispositif d'abattage comprend en outre :
- une troisième articulation (16) au moyen de laquelle l'actionneur (15) à cylindre est couplé à la surface avant (2a) du dispositif d'abattage de telle sorte que toutes lesdites articulations (16, 17, 19) sont placées sur le même côté de la surface avant.

2. Dispositif d'abattage selon la revendication 1, **caractérisé en ce que** la ligne (D) s'étendant par la première articulation (19) et la deuxième articulation (17) est perpendiculaire ou presque perpendiculaire audit sens longitudinal, et également la ligne (C) s'étendant par la première articulation (19) et la troisième articulation (16) est perpendiculaire ou presque perpendiculaire audit sens longitudinal, mais lesdites lignes sont néanmoins différentes en sens dans les différentes positions (A, B) de la lame (12) d'ébranchage.

3. Dispositif d'abattage selon la revendication 1 ou 2, **caractérisé en ce que** ledit actionneur (15) à cylindre est perpendiculaire ou presque perpendiculaire audit sens longitudinal.

4. Dispositif d'abattage selon l'une quelconque des revendications 1 à 3, **caractérisé en ce que** la troisième articulation (16) est placée entre la ligne (D) s'étendant par la première articulation (19) et la deuxième articulation (17) et la surface avant (2a).

5. Dispositif d'abattage selon l'une quelconque des revendications 1 à 4, **caractérisé en ce que** la deuxième articulation (17) est placée dans la zone entre la première articulation (19) et le bord coupant (12a).

6. Dispositif d'abattage selon l'une quelconque des revendications 2 à 5, **caractérisé en ce que** la lame (12) d'ébranchage comprend une surface (12b), contre laquelle le tronc peut être pressé et au niveau du bord avant ledit bord coupant (12a) se trouve.

7. Dispositif d'abattage selon l'une quelconque des revendications 2 à 6, **caractérisé en ce que** la lame (12) d'ébranchage est supportée contre la surface avant (2a), lorsque la lame (12) d'ébranchage est dans la première position (A) pour ébranchage, et la lame (12) d'ébranchage est tournée à l'écart de la surface avant (2a), lorsque la lame (12) d'ébranchage est dans la deuxième position (B) et que le bord coupant (12a) est à ladite distance du tronc.

8. Dispositif d'abattage selon la revendication 7, **caractérisé en ce que** la lame (12) d'ébranchage peut revenir de la deuxième position (B) à la première position (A) lorsqu'elle est poussée par une branche dans le tronc.

9. Dispositif d'abattage selon l'une quelconque des revendications 2 à 7, **caractérisé en ce que** le dispositif d'abattage comprend en outre un dispositif (22) de sciage en travers pour couper le tronc, dans lequel ladite surface avant (2a) est dans ledit dispositif (22) de sciage en travers.

10. Dispositif d'abattage selon l'une quelconque des revendications 1 à 9, **caractérisé en ce que** la lame (12) d'ébranchage comprend un bord coupant (12a) pour ébrancher le tronc d'arbre lorsqu'il est alimenté dans son sens longitudinal (X) au-delà de la lame (12) d'ébranchage,
et **en ce que** l'actionneur (15) à cylindre peut être placé presque parallèle à une ligne (D) s'étendant par la première articulation (19) et la deuxième articulation (17) de façon à ce que l'actionneur (15) à cylindre et la troisième articulation (16) appartenant à celui-ci pour une connexion, soient placés dans la zone entre la première et la deuxième articulation.

11. Dispositif d'abattage selon la revendication 10, **caractérisé en ce que** la lame (12) d'ébranchage comprend deux fourchettes (12d, 12e), dont une extrémité est prévue avec ladite première articulation (19) et dont l'autre extrémité est prévue avec ledit bord coupant (12a), et l'actionneur (15) à cylindre est placé entre lesdites fourchettes.

12. Dispositif d'abattage selon la revendication 10 ou 11, **caractérisé en ce que** la lame (12) d'ébranchage comprend un moyen (20, 21) de commande, au moyen duquel un opérateur peut commander ledit actionneur (15) à cylindre.
